# EUROPÄISCHE PATENTANMELDUNG

(11) **EP 3 542 945 A1**
(43) Veröffentlichungstag der Anmeldung: **25.09.2019**
(21) Anmeldenummer: 18020102.2
(22) Anmeldetag: 19.03.2018
(51) Int. Cl.: B23K 9/32

(54) **FORMIERVORRICHTUNG UND VERFAHREN ZUM ZUFÜHREN MINDESTENS EINES WURZELSCHUTZGASES**

(71) Anmelder: Linde Aktiengesellschaft, 80331 München (DE)
(72) Erfinder: HALOSIN, Sergej, 20144 Hamburg (DE)

(57) **Zusammenfassung**

Die Erfindung betrifft eine Formiervorrichtung (200) zum Zuführen mindestens eines Wurzelschutzgases zur Wurzelseite mindestens eines zu fügenden Bereichs (11) wenigstens eines Rohres (10), umfassend mindestens eine Wurzelschutzgaszuführeinrichtung (220) zum Zuführen des Wurzelschutzgases und mindestens eine Wurzelschutzgasleiteinrichtung (210) zum Führen oder zum Lenken des zugeführten Wurzelschutzgases in axialer Richtung entlang der Innenwand des Rohres (10) entlang der Wurzelseite des zu fügenden Berechs (11), wobei die Wurzelschutzgasleiteinrichtung (210) zylinderförmig geformt und zentriert in das Rohr (10) einsetzbar ist, und wobei die Wurzelschutzgaszuführeinrichtung (220) innerhalb der Wurzelschutzgasleiteinrichtung (210) angeordnet ist. Weiterhin betrifft die Erfindung ein Verfahren zum Formieren oder zum Zuführen mindestens eines Wurzelschutzgases zur Wurzelseite mindestens eines zu fügenden Bereichs (11) mindestens eines Rohrs (10), wobei das zugeführte Wurzelschutzgas in Richtung entlang einer Innenseite des Rohres (10) entlang der Wurzelseite des zu fügenden Bereichs geleitet, geführt oder gelenkt wird, wobei das Wurzelschutzgas zusätzlich in radialer Richtung geführt wird, so dass bei Zusammenfügen mit einem Rohrbogen (12) das Wurzelschutzgas entlang einer Krümmung des Rohrbogens (12) in axialer Richtung geführt wird.

## Beschreibung

Die Erfindung betrifft eine Formiervorrichtung und ein Verfahren zum Formieren bzw. zum Zuführen mindestens eines Wurzelschutzgases zur Wurzelseite mindestens eines zu fügenden Bereichs.

### Stand der Technik

Der Begriff Formieren bezeichnet das Begasen oder das Umspülen der Wurzelseite und der Wärmeeinflusszone eines zu fügenden Bereichs mit mindestens einem Wurzelschutzgas. Hierbei wird als Wurzelseite der dem Fügegerät abgewandte Bereich des zu fügenden Bereichs bezeichnet.

Ferner wird beim Fügen einer Naht in mehreren Lagen die unterste und/oder zuerst gebildete Lage und bei einer nur aus einer Lage gebildeten Naht der vom Fügegerät abgewandte Teilbereich der Naht als Wurzel bezeichnet.

Der Begriff Fügen umfasst im Folgenden insbesondere sowohl Schweißen, insbesondere alle Schmelzschweißverfahren, wie ganz besonders Lichtbogenschweißen oder auch Strahlschweißverfahren (und hierbei insbesondere Laserstrahlschweißen) als auch Lichtbogenlöten sowie Mischformen aus Schweißen und Löten.

Ferner wird der Begriff Wurzelschutzgas vorliegend sowohl für reine Wurzelschutzgase als auch für Wurzelschutzgasmischungen verwendet.

Als Wurzelschutzgas werden beim Formieren üblicherweise Gase, wie Argon, oder reaktionsträge Gase, wie Stickstoff, sowie Gemische aus Stickstoff und Wasserstoff (Formiergase nach DIN EN 439) oder Argon und Wasserstoff eingesetzt. Hierbei hängt die Wahl des Wurzelschutzgases von den zu verarbeitenden Werkstoffen, von den Bauteilen, von der Art der Wurzelschutzgaszuführung und von den Fügebedingungen ab. Wurzelschutzgase erleichtern eine gute Wurzelbildung der Naht, verbessern die Oberflächenqualität der Wurzel und verhindern Zunderbildung bzw. Anlauffarben im Fügebereich.

Funktion des Wurzelschutzgases beim Formieren ist es, die sauerstoffhaltige Atmosphäre zu verdrängen und eine hochwertige Oberfläche zu erzielen. Bei Fügearbeiten an korrosionsbeständigen Werkstücken, beispielsweise an nichtrostendem Stahl, oxidieren nämlich die Naht und die Nahtzonen bei ungehindertem Zustrom von Luftsauerstoff aufgrund der Fügewärme in Verbindung mit dem Luftsauerstoff und es zeigen sich Anlauffarben.

Weil die Korrosionsbeständigkeit oxidierter Oberflächen stark herabgesetzt ist, ist es beim Fügen von Gegenständen aus nichtrostendem Stahl wichtig, auf ausreichenden Gasschutz zu achten, auch und besonders auf der Wurzelseite. Die vorliegende Erfindung betrifft daher insbesondere den Wurzelschutz beim Fügen von Konstruktionen aus nichtrostendem Stahl, vornehmlich beim Fügen von Rohrleitungen aus nichtrostendem Stahl.

Aber auch ein Wurzelschutz bei anderen Werkstoffen wird von der vorliegenden Erfindung betroffen.

Mittels Formieren werden die Bildung von Anlauffarben sowie ein Oxidieren im zu fügenden Bereich durch den Einsatz von Wurzelschutzgas, gegebenenfalls in Verbindung mit einer technischen Vorrichtung, einer sogenannten Formiervorrichtung, verhindert.

Bekannte Formiervorrichtungen bringen das Wurzelschutzgas üblicherweise durch geeignete Anordnung von Dichtlippen und Diffusoren innerhalb des Rohrs direkt an die Fügestelle und halten den Luftsauerstoff fern. Beim Schweißen von Rohrleitungen aus nichtrostendem Stahl werden Formiervorrichtungen eingesetzt, um einen kurzen Abschnitt des Rohrs abzusperren und mit dem Wurzelschutzgas zu füllen, wodurch eine unerwünschte wurzelseitige Nahtoxidation vermieden bzw. zumindest verringert wird und Anlauffarben unterbunden werden.

Hauptvorteile der Formiervorrichtung sind Gaseinsparung und effektiverer Nahtschutz. Um korrosionsbeständige Fügenähte zu erreichen, wird der Restsauerstoffgehalt an der Wurzelseite vorzugsweise auf bis zu maximal etwa dreißig Teile pro Million (ppm) reduziert.

Konventionelle Formiervorrichtungen beruhen auf zwei verschiedenen Prinzipien: Entweder wird der zu spülende Raum komplett mit Wurzelschutzgas geflutet, wobei geringe Strömungsgeschwindigkeiten vorherrschen, oder es wird die Naht direkt radial angeblasen. Damit wird zwar die Reduktion des Sauerstoffgehalts auf das erforderliche Maß direkt an der Naht gewährleistet, jedoch zeigen sich an den Verbindungen oft noch Verfärbungen.

Charakteristisch für diese Verfärbungen ist, dass sie vorwiegend neben der Naht und gelegentlich auch auf der Naht auftreten. Selbst bei im technischen Sinne perfekter Formierung, also bei 0 ppm Restsauerstoffgehalt, sind diese Verfärbungen möglich.

DE 10 2007 058 804 A1 offenbart eine Formiervorrichtung, die auf dem Prinzip basiert, dass eine Wurzelschutzgasströmung in Richtung entlang der Wurzelseite des zu fügenden Bereichs, insbesondere in axialer Richtung zum Gegenstand und/oder in einer Ebene im Wesentlichen parallel zum zu fügenden Bereich des Gegenstands, beispielsweise entlang der Innenwand des zu fügenden Rohrs, geführt wird.

Das Wurzelschutzgas strömt also gerichtet entlang einer (im Prinzip in beliebiger Weise geformten) Oberfläche des Gegenstands, beispielsweise längs und/oder quer zur Naht. Diese gerichtete Wurzelschutzgasströmung bewirkt, dass eventuell aus dem Grundwerkstoff des Gegenstands, beispielsweise aus dem Rohrmaterial, austretende Dämpfe von der Fügestelle bzw. vom zu fügenden Bereich weggeführt werden, so dass sich diese Dämpfe nicht im Bereich der Naht ablagern können. Dieses Beispiel gewährleistet somit eine metallisch blanke Nahtausbildung ohne jegliche Verfärbung, also ohne Anlauffarben (Chromoxide) und ohne Verfärbungen und Beläge.

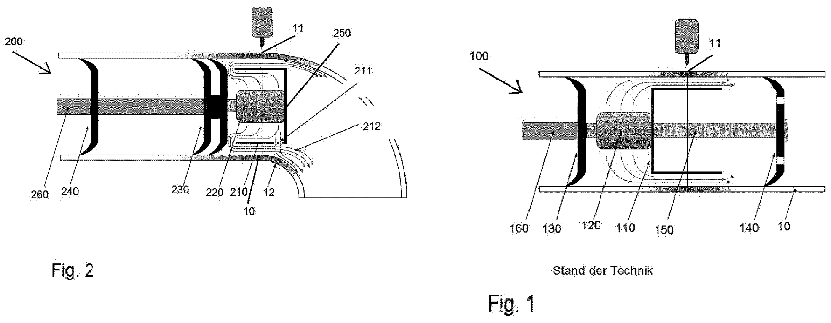

Fig. 1 zeigt eine hierfür geeignete aus dem Stand der Technik bekannte Formiervorrichtung 100. Eine Wurzelschutzgasleiteinrichtung 110 ist in Form eines zylinderförmigen Verdrängungskörpers ausgebildet, der zentriert in ein Rohr 10 eingesetzt werden kann. Die Mantelflächen und die linke Stirnfläche des Verdrängungskörpers 110 sind geschlossen ausgebildet. Zwischen der linken Stirnfläche und einem Dichtelement 130 ist eine Wurzelschutzgaszuführeinrichtung 120 in Form eines Diffusors angeordnet. Die Wurzelschutzgaszuführeinrichtung 120 führt das Wurzelschutzgas in den Zwischenraum zwischen Dichtung 130 und linker Stirnfläche ein, so dass hier ein Überdruck entsteht, durch den das Wurzelschutzgas in den Zwischenraum zwischen Mantelfläche des zylinderförmigen Verdrängungskörpers 110 und das Rohr 10 einströmt. Dadurch wird ein Strom in axialer Rohrrichtung erzeugt, so dass das zugeführte Wurzelschutzgas zumindest im Bereich der Wurzelseite der Schweißstelle bzw. des zu fügenden Bereichs 11 in Richtung entlang der Wurzelseite des zu fügenden Bereichs geleitet wird. Rechts von dem Verdrängungskörper 110 ist ein Zentrierelement 140 angeordnet, das gasdurchlässig ist, wodurch der Verdrängungskörper im Rohr zentriert werden kann und wodurch der erzeugte Wurzelgasstrom weiterströmen kann. Links von der Dichtung 130 ist eine Gaszuleitung 160 angeschlossen, durch die das Wurzelgas in die Wurzelgaszuführeinrichtung 120 geleitet wird.

Die gezeigte Formiervorrichtung ist insbesondere für den Einsatz in geraden Rohren konzipiert. Durch ihre Größe und Steifheit ist die Formiervorrichtung nicht in der Lage, durch einen Rohrbogen geführt zu werden

Ziel der Erfindung ist es, das Formieren in einem Rohrbogen zu ermöglichen.

### Offenbarung der Erfindung

Die Erfindung schlägt eine Formiervorrichtung und ein Verfahren zum Formieren oder zum Zuführen mindestens eines Wurzelschutzgases zur Wurzelseite mindestens eines zu fügenden Bereichs mindestens eines Rohrs gemäß den unabhängigen Patentansprüchen vor. Vorteilhafte Ausgestaltungen ergeben sich aus den jeweiligen Unteransprüchen und der nachfolgenden Beschreibung.

### Vorteile der Erfindung

Erfindungsgemäß ist die Wurzelschutzgaszuführeinrichtung innerhalb der Wurzelschutzgasleiteinrichtung angeordnet.

Dies ist vorteilhaft, da dadurch die Formiervorrichtung wesentlich kompakter ausgebildet werden kann als beispielsweise die Formiervorrichtung aus Fig.1. Dadurch lässt sich die Formiervorrichtung auch von einer Seite an den Krümmungsbereich eines Rohrbogens heranführen oder sogar durch einen Rohrbogen hindurch führen.

In einer vorteilhaften Ausführungsform ist eine Stirnfläche der zylinderförmigen Wurzelschutzgasleiteinrichtung zumindest teilweise geöffnet, so dass das Wurzelschutzgas von der Wurzelschutzgaszuführeinrichtung in der Wurzelschutzgasleiteinrichtung durch die Stirnfläche über einen Rand der zylinderförmigen Wurzelschutzgasleiteinrichtung in einen Zwischenraum zwischen Mantelfläche der Wurzelschutzgasleiteinrichtung, die als Verdrängungskörper fungiert, und das Rohr strömen kann und so zumindest im Bereich der Wurzelseite in Richtung entlang der Wurzelseite des zu fügenden Bereichs geleitet wird. Auf diese Weise wird ein kompakter Aufbau ermöglicht, der in einfacher Weise einen Wurzelschutzgasstrom in axialer Richtung entlang der Innenwand des Rohres entlang der Wurzelseite des zu fügenden Bereichs bei geringem Gasverbrauch ermöglicht, auch wenn der zu fügende Bereich ein Randbereich eines Rohrbogens ist. Dabei ist es vorteilhaft, wenn die andere Stirnfläche der zylinderförmigen Wurzelschutzgasleiteinrichtung zumindest teilweise, bevorzugt vollständig geschlossen ist, so dass ein gerichteter Wurzelgasstrom aus der geöffneten Stirnfläche erzeugt wird.

Zweckmäßigerweise weist die Mantelfläche der zylinderförmigen Wurzelschutzgasleiteinrichtung wenigstens ein Loch auf, wobei die Wurzelschutzgaszuführeinrichtung mit der Wurzelschutzgasleiteinrichtung weiterhin derart zusammenwirkt, dass zugeführtes Wurzelschutzgas durch das Loch radial von innen nach außen geleitet wird.

Die Wurzelschutzgasleiteinrichtung muss so platziert werden, dass die Strömung durch das wenigstens eine Loch in eine Krümmung des Rohrbogens gerichtet ist. Dies sorgt für eine Schutzgasströmung, welche die von der Spaltströmung nicht oder kaum erfasste Krümmung des Rohrbogens abdeckt und auch hier die Bildung von Manganfahnen verhindert. Durch das zusätzlich zur axialen Richtung von innen nach außen radial geführte Wurzelschutzgas wird das Wurzelschutzgas entlang der Krümmung des Rohrbogens geführt. Dadurch ist auch bei gekrümmten Rohrbögen das Prinzip erfüllt, dass eine Wurzelschutzgasströmung in Richtung entlang der Wurzelseite des zu fügenden Bereichs, insbesondere in axialer Richtung zum Gegenstand und/oder in einer Ebene im Wesentlichen parallel zum zu fügenden Bereich des Gegenstands, beispielsweise entlang der Innenwand des zu fügenden Rohrs, geführt wird.

Vorteilhaft weist die Mantelfläche das Loch in axialer Richtung näher an einem Ende der Mantelfläche als an einer Mitte der Mantelfläche auf, insbesondere nahe der im Wesentlichen oder vollständig geschlossenen Stirnfläche der Wurzelschutzgasleiteinrichtung, wodurch bevorzugt bei Fügen des Rohres an einen Rohrbogen eine Wurzelschutzgasströmung mit radialer Komponente und somit entlang einer Krümmung eines Rohrbogens erzeugt wird. Denkbar ist, dass die Mantelfläche der zylinderförmigen Wurzelschutzgasleiteinrichtung mehrere Löcher aufweist, bevorzugt 2 bis 30, noch bevorzugter 5 bis 20. Auf diese Weise wird bevorzugt eine Wurzelschutzgasströmung entlang einer gesamten Krümmung eines Rohbogens ermöglicht.

Zweckmäßigerweise weist die Formiervorrichtung mindestens ein in das Rohr einsetzbares Dichtelement zum zumindest teilweisen Abdichten des zugeführten Wurzelschutzgases in einer axialen Rohrrichtung auf. Vorteilhaft ist das Dichtelement auf der Seite der Wurzelschutzgasleiteinrichtung angeordnet, an der die zumindest teilweise geöffnete Stirnfläche sich befindet. Auf diese Weise kann das Wurzelschutzgas von der Wurzelschutzgaszuführeinrichtung in der Wurzelschutzgasleiteinrichtung durch die zumindest teilweise geöffnete Stirnfläche in den Zwischenraum zwischen Dichtung und linker Schnittfläche einströmen, so dass hier ein Überdruck entsteht, durch den das Wurzelschutzgas in den Zwischenraum zwischen Mantelfläche des zylinderförmigen Verdrängungskörpers bzw. der zylinderförmigen Wurzelschutzgasleiteinrichtung und das Rohr einströmt. Dadurch wird ein Strom in axialer Rohrrichtung erzeugt, so dass das zugeführte Wurzelschutzgas zumindest im Bereich der Wurzelseite in Richtung entlang der Wurzelseite des zu fügenden Bereichs geleitet wird.

In einer weiteren vorteilhaften Ausführungsform weist die Formiervorrichtung mindestens ein in das Rohr einsetzbares, insbesondere gasdurchlässiges, Zentrierelement zum Zentrieren der Wurzelschutzgasleiteinrichtung auf. Dadurch kann insbesondere die Wurzelschutzgasleiteinrichtung, die als Verdrängungskörper fungiert, in einer zentralen Rohrposition gehalten werden, so dass ein Zwischenraum zwischen der Mantelfläche der zylinderförmigen Wurzelschutzgasleiteinrichtung und dem Rohr gleichmäßig ausgebildet ist.

Zweckmäßigerweise ist das mindestens eine Zentrierelement in axialer Richtung nur an einer Seite bezüglich der Wurzelschutzgasleiteinrichtung angeordnet. Dadurch wird vorteilhaft ein kompakter Aufbau ermöglicht, wodurch die Wurzelschutzgasleiteinrichtung bis ganz nah an einen Rohrbogen herangeführt werden kann.

Vorteilhaft sind das mindestens eine Zentrierelement und das mindestens eine Dichtelement beide an derselben Seite bezüglich der Wurzelschutzgasleiteinrichtung in axialer Richtung angeordnet. Dies ist zweckmäßigerweise die Seite, an der die Stirnfläche zumindest teilweise offen ist. Auf diese Weise kann die Wurzelschutzgasleiteinrichtung in axialer Richtung ganz nah an einen Rohrbogen herangeführt werden.

In einer vorteilhaften Ausführungsform ist die Wurzelschutzgaszuführeinrichtung ein Diffusor. Dies ist vorteilhaft, da sich das zugeführte Wurzelschutzgas auf diese Weise besonders gut in der Wurzelschutzgasleiteinrichtung verteilen und einen Wurzelschutzgasstrom zu der offenen Stirnfläche über einen Rand der zylinderförmigen Wurzelschutzgasleiteinrichtung in einen Zwischenraum zwischen Mantelfläche der Wurzelschutzgasleiteinrichtung und bevorzugt durch das Loch in der Mantelfläche in radialer Richtung ausbilden kann.

Gemäß einem weiteren Aspekt der Erfindung wird ein Verfahren zum Formieren oder zum Zuführen mindestens eines Wurzelschutzgases zur Wurzelseite mindestens eines zu fügenden Bereichs mindestens eines Rohrs vorgeschlagen, wobei das zugeführte Wurzelschutzgas in Richtung entlang einer Innenseite des Rohres entlang der Wurzelseite des zu fügenden Bereichs geleitet, geführt oder gelenkt wird, wobei das Wurzelschutzgas zusätzlich in radialer Richtung geführt wird, so dass bei Zusammenfügen mit einem Rohrbogen das Wurzelschutzgas entlang einer Krümmung des Rohrbogens in axialer Richtung geführt wird. Dies ist vorteilhaft, da dies für eine Schutzgasströmung sorgt, welche die von der Spaltströmung nicht oder kaum erfasste Krümmung des Rohrbogens abdeckt und auch hier die Bildung von Manganfahnen verhindert. Durch das zusätzlich zur axialen Richtung von innen nach außen radial geführte Wurzelschutzgas wird das Wurzelschutzgas entlang der Krümmung des Rohrbogens geführt, so dass auch bei gekrümmten Rohrbögen das Prinzip erfüllt ist, dass eine Wurzelschutzgasströmung in Richtung entlang der Wurzelseite des zu fügenden Bereichs, insbesondere in axialer Richtung zum Gegenstand und/oder in einer Ebene im Wesentlichen parallel zum zu fügenden Bereich des Gegenstands, beispielsweise entlang der Innenwand des zu fügenden Rohrs, geführt wird.

Zweckmäßigerweise wird als Wurzelschutzgas Argon, Stickstoff und/oder Wasserstoff verwendet. Dies sind vorteilhafte Gase zur Verhinderung von Anlauffarben.

Vorteilhaft wird für das Verfahren eine Formiervorrichtung wie oben beschrieben verwendet.

Weitere Vorteile und Ausgestaltungen der Erfindung ergeben sich aus der Beschreibung und den beiliegenden Zeichnungen.

Es versteht sich, dass die vorstehend genannten und die nachstehend noch zu erläuternden Merkmale nicht nur in er jeweils angegebenen Kombination, sondern auch in anderen Kombinationen oder in Alleinstellung verwendbar sind, ohne den Rahmen der vorliegenden Erfindung zu verlassen.

Die Erfindung ist anhand einiger Ausführungsbeispiele in den Zeichnungen schematisch dargestellt und wird im Folgenden unter Bezugnahme auf die Zeichnungen beschrieben.

Kurze Beschreibung der Zeichnungen
- Fig. 1: zeigt eine Formiervorrichtung aus dem Stand der Technik;
- Fig. 2: zeigt eine Ausführungsform einer erfindungsgemäßen Formiervorrichtung;
- Fig. 3A-3H: zeigen Schritte eines Verschweißverfahrens für einen Rohrbogen an zwei offene Rohrenden unter Verwendung einer Ausführungsform einer erfindungsgemäßen Formiervorrichtung;
- Fig. 4A-4H: zeigen Schritte eines Verschweißverfahrens für einen Rohrbogen an ein offenes und ein geschlossenes Rohrende unter Verwendung einer Ausführungsform einer erfindungsgemäßen Formiervorrichtung.

Fig. 1 wurde bereits in der Beschreibungseinleitung erläutert.

Fig. 2 zeigt eine Ausführungsform einer erfindungsgemäßen Formiervorrichtung, die mit 200 bezeichnet ist. Die Formiervorrichtung 200 ist hier in einem Rohr 10 angeordnet, das gerade mit einem Rohrbogen 12 verschweißt wird. Die Schweißstelle ist mit 11 bezeichnet.

Die Formiervorrichtung 200 zum Zuführen mindestens eines Wurzelschutzgases zur Wurzelseite mindestens eines zu fügenden Bereichs eines Rohres 10 umfasst eine Wurzelschutzgaszuführeinrichtung 220 zum Zuführen des Wurzelschutzgases, die hier als ein Diffusor ausgebildet ist und eine Wurzelschutzgasleiteinrichtung 210 zum Führen oder zum Lenken des zugeführten Wurzelschutzgases in axialer Richtung entlang der Innenwand des Rohres 10 entlang der Wurzelseite des zu fügenden Bereichs, die als ein Verdrängungskörper fungiert. Die Wurzelschutzgasleiteinrichtung 210 ist zylinderförmig geformt und zentriert in das Rohr einsetzbar. Die Wurzelschutzgaszuführeinrichtung 220 ist innerhalb der Wurzelschutzgasleiteinrichtung 210 angeordnet ist. Über eine Wurzelgaszuleitung 260 an der linken Seite der Abbildung wird Wurzelgas in die Wurzelschutzgaszuführeinrichtung 220 geleitet.

Eine Stirnfläche der zylinderförmigen Wurzelschutzgasleiteinrichtung 220 ist zumindest teilweise geöffnet, so dass das Wurzelschutzgas von der Wurzelschutzgaszuführeinrichtung 220 in der Wurzelschutzgasleiteinrichtung 210 durch die Stirnfläche über einen Rand der zylinderförmigen Wurzelschutzgasleiteinrichtung 210 in einen Zwischenraum zwischen Mantelfläche der Wurzelschutzgasleiteinrichtung 210, die als Verdrängungskörper fungiert, und das Rohr strömen kann und so zumindest im Bereich der Wurzelseite in Richtung entlang der Wurzelseite des zu fügenden Bereichs 11 geleitet wird. Die andere Stirnfläche der zylinderförmigen Wurzelschutzgasleiteinrichtung 210 ist vollständig geschlossen, so dass ein gerichteter Wurzelgasstrom aus der geöffneten Stirnfläche erzeugt wird.

Die Mantelfläche der zylinderförmigen Wurzelschutzgasleiteinrichtung 210 weist wenigstens ein Loch 211 auf, wobei die Wurzelschutzgaszuführeinrichtung 220 mit der Wurzelschutzgasleiteinrichtung 210 weiterhin derart zusammenwirkt, dass zugeführtes Wurzelschutzgas durch das Loch 211 radial von innen nach außen geleitet wird. Die Wurzelschutzgasleiteinrichtung 210 ist hier so platziert, dass die Strömung durch das wenigstens eine Loch 211 in eine Krümmung des Rohrbogens 12 gerichtet ist. Dies sorgt für eine Schutzgasströmung, welche die von der Spaltströmung nicht erfasste Krümmung des Rohrbogens 12 abdeckt und auch hier die Bildung von Manganfahnen verhindert. Durch das zusätzlich zur axialen Richtung von innen nach außen geführte Wurzelschutzgas wird das Wurzelschutzgas entlang der Krümmung des Rohrbogens 12 geführt, so dass auch bei gekrümmten Rohrbögen 12 das Prinzip erfüllt ist, dass eine Wurzelschutzgasströmung in Richtung entlang der Wurzelseite des zu fügenden Bereichs, insbesondere in Richtung zum Gegenstand und/oder in einer Ebene im Wesentlichen parallel zum zu fügenden Bereich des Gegenstands, beispielsweise entlang der Innenwand des zu fügenden Rohrs, geführt wird.

Die Formiervorrichtung 200 weist ein in das Rohr 10 einsetzbares Dichtelement 230 zum zumindest teilweisen Abdichten des zugeführten Wurzelschutzgases in einer axialen Rohrrichtung auf. Das Dichtelement 230 ist hier auf der Seite der Wurzelschutzgasleiteinrichtung 210 angeordnet, an der die zumindest teilweise geöffnete Stirnfläche sich befindet. Auf diese Weise kann das Wurzelschutzgas von der Wurzelschutzgaszuführeinrichtung 220 in der Wurzelschutzgasleiteinrichtung 210 durch die zumindest teilweise geöffnete Stirnfläche in den Zwischenraum zwischen Dichtung und linker Stirnfläche einströmen, so dass hier ein Überdruck entsteht, durch den das Wurzelschutzgas in den Zwischenraum zwischen Mantelfläche des zylinderförmigen Verdrängungskörpers 210 bzw. der zylinderförmigen Wurzelschutzgasleiteinrichtung 210 und das Rohr 10 einströmt.

Die Formiervorrichtung 200 weist weiterhin ein in das Rohr 10 einsetzbares Zentrierelement 240 zum Zentrieren der Wurzelschutzgasleiteinrichtung auf. Zusätzlich ist auf der anderen Stirnfläche ein Gasanschluss 250 angeordnet, um die Gaszuleitung 260 umzustecken.

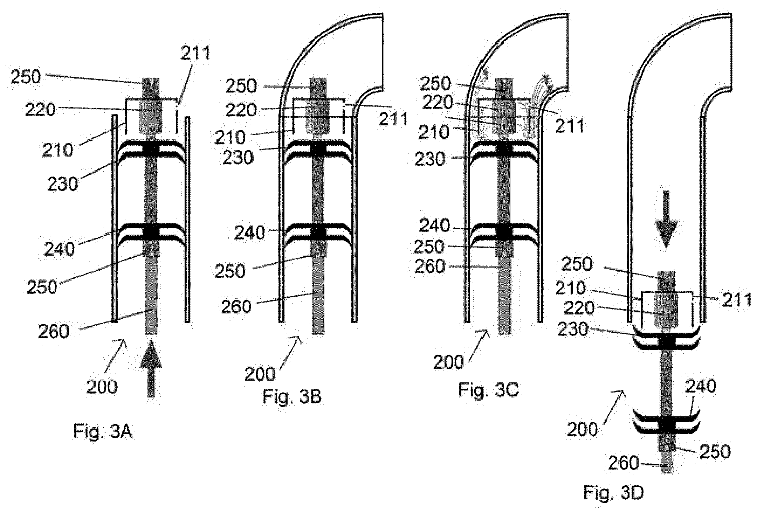

Fig. 3A-3H zeigen Schritte eines Verschweißverfahrens für einen Rohrbogen an zwei offene Rohrenden unter Verwendung einer Ausführungsform einer erfindungsgemäßen Formiervorrichtung 200.

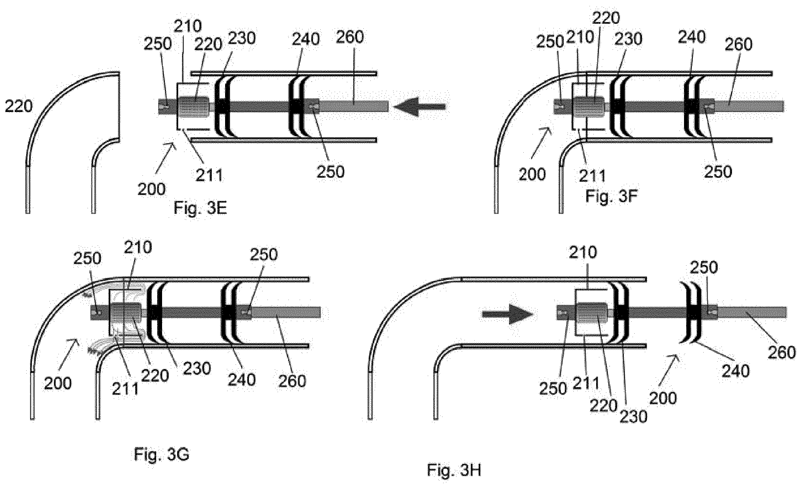

In Fig. 3A ist gezeigt, wie die Formiervorrichtung 200 in ein offenes Rohr eingeführt wird, derart, dass Dichtelement 230 und das Zentrierelement 240 in dem Rohr verbleiben, während die Wurzelschutzgasleiteinrichtung 210 teilweise aus dem Rohr hervorschaut. Die Formiervorrichtung 200 weist zwei Gasanschlüsse 250 auf, einen an der Seite des Zentrierelements 240, den anderen an der Seite der Wurzelschutzgasleiteinrichtung 210. Die Gaszuleitung 260 ist an dem Gasanschluss 250 angeschlossen, der an dem Zentrierelement angeordnet ist. Nun wird in Fig. 3B ein Rohrbogen auf das Ende des Rohres aufgesetzt, aus dem die Wurzelschutzgasleiteinrichtung 210 hervorschaut. In Fig. 3C wird ein erfindungsgemäßes Formierverfahren durchgeführt, wobei das Rohr mit dem Rohrbogen verschweißt wird. In Fig. 3D wird die Formiervorrichtung 200 durch das Rohr wieder entnommen. In Fig. 3E wird die Formiervorrichtung 200 in ein anderes offenes Rohr eingeführt, auch derart, dass Dichtelement 230 und das Zentrierelement 240 in dem Rohr verbleiben, während die Wurzelschutzgasleiteinrichtung 210 teilweise aus dem Rohr hervorschaut. In Fig. 3F wird das andere Ende des Rohrbogens auf das Ende des Rohres aufgesetzt, aus dem die Wurzelschutzgasleiteinrichtung 210 hervorschaut. In Fig. 3G wird wieder ein erfindungsgemäßes Formierverfahren durchgeführt, wobei das Rohr mit dem Rohrbogen verschweißt wird. In Fig. 3H wird die Formiervorrichtung 200 aus dem Rohr entnommen.

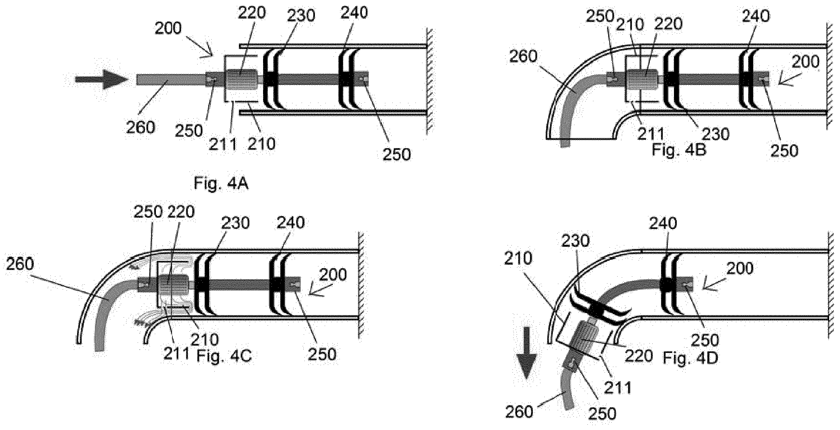

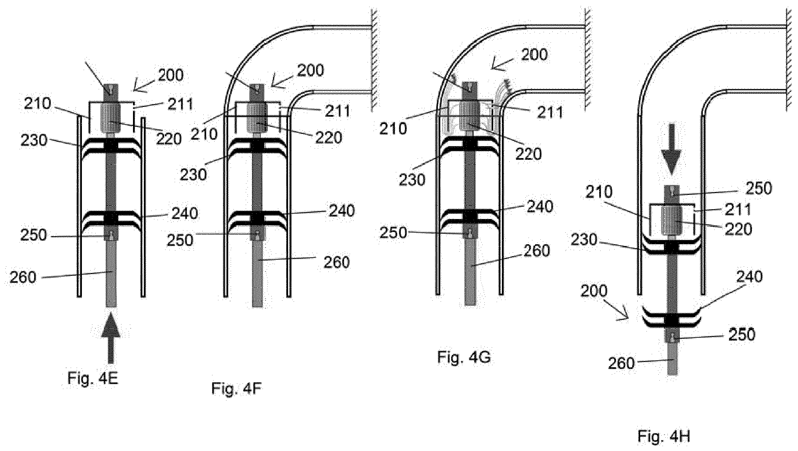

Fig. 4A-4H zeigen Schritte eines Verschweißverfahrens für einen Rohrbogen an ein offenes und ein geschlossenes Rohrende unter Verwendung einer Ausführungsform einer erfindungsgemäßen Formiervorrichtung 200.

In diesem Fall ist die Gaszuleitung 260 zunächst an dem Gasanschluss 250 angeordnet. In Fig. 4A wird die Formiervorrichtung 200 in ein einseitig geschlossenes Rohr eingesetzt, derart, dass Dichtelement 230 und das Zentrierelement 240 in dem Rohr verbleiben, während die Wurzelschutzgasleiteinrichtung 210 teilweise aus dem offenen Ende des Rohrs hervorschaut. Auch die Gaszuleitung 260 schaut mit einem der Gasanschlüsse 250 aus dem offenen Ende des Rohres heraus. Nun wird in Fig. 4B ein Rohrbogen auf das Ende des Rohres aufgesetzt, aus dem die Wurzelschutzgasleiteinrichtung 210 hervorschaut. In Fig. 4C wird ein erfindungsgemäßes Formierverfahren durchgeführt, wobei das Rohr mit dem Rohrbogen verschweißt wird. In Fig. 4D wird die Formiervorrichtung 200 durch den Rohrbogen entnommen.

Dann wird die Gaszuleitung 260 an den anderen Gasanschluss 250 angesteckt. Die Schritte in Fig. 4E-4H entsprechen dann den Schritten in Fig. 3E-3H.

### Bezugszeichen

- 10: Rohr
- 11: zu fügender Bereich, Schweißstelle
- 12: Rohrbogen
- 100: Formiervorrichtung (Stand der Technik)
- 110: Wurzelschutzgasleiteinrichtung, Verdrängungskörper
- 120: Wurzelschutzgaszuführeinrichtung
- 130: Dichtelement
- 140: Zentrierelement
- 160: Gaszuleitung
- 200: Formiervorrichtung
- 210: Wurzelschutzgasleiteinrichtung, Verdrängungskörper
- 211: Loch
- 212: Strömungsumlenkung
- 220: Wurzelschutzgaszuführeinrichtung
- 230: Dichtelement
- 240: Zentrierelement
- 250: Gasanschluss
- 260: Gaszuleitung

## Patentansprüche

1. Formiervorrichtung (200) zum Zuführen mindestens eines Wurzelschutzgases zur Wurzelseite mindestens eines zu fügenden Bereichs (11) wenigstens eines Rohres (10), umfassend mindestens eine Wurzelschutzgaszuführeinrichtung (220) zum Zuführen des Wurzelschutzgases und mindestens eine Wurzelschutzgasleiteinrichtung (210) zum Führen oder zum Lenken des zugeführten Wurzelschutzgases in axialer Richtung entlang der Innenwand des Rohres (10) entlang der Wurzelseite des zu fügenden Bereichs (11), wobei die Wurzelschutzgasleiteinrichtung (210) zylinderförmig geformt ist und zentriert in das Rohr (10) einsetzbar ist, **dadurch gekennzeichnet, dass** die Wurzelschutzgaszuführeinrichtung (220) innerhalb der Wurzelschutzgasleiteinrichtung (210) angeordnet ist.

2. Formiervorrichtung (200) nach Anspruch 1, **dadurch gekennzeichnet, dass** eine Stirnfläche der zylinderförmigen Wurzelschutzgasleiteinrichtung (210) zumindest teilweise geöffnet ist, so dass das Wurzelschutzgas von der Wurzelschutzgaszuführeinrichtung (220) in der Wurzelschutzgasleiteinrichtung (210) durch die Stirnfläche über einen Rand der zylinderförmigen Wurzelschutzgasleiteinrichtung (210) in einen Zwischenraum zwischen Mantelfläche der Wurzelschutzgasleiteinrichtung (210) und das Rohr (10) strömen kann und so zumindest im Bereich der Wurzelseite in Richtung entlang der Wurzelseite des zu fügenden Bereichs (11) geleitet wird.

3. Formiervorrichtung (200) nach Anspruch 1 oder 2, **dadurch gekennzeichnet, dass** die Mantelfläche der zylinderförmigen Wurzelschutzgasleiteinrichtung (210) wenigstens ein Loch (211) aufweist, wobei die Wurzelschutzgaszuführeinrichtung (220) mit der Wurzelschutzgasleiteinrichtung (210) weiterhin derart zusammenwirkt, dass zugeführtes Wurzelschutzgas durch das Loch (211) radial von innen nach außen geleitet wird.

4. Formiervorrichtung (200) nach Anspruch 3, **dadurch gekennzeichnet, dass** die Mantelfläche das Loch (211) in axialer Richtung näher an einem Ende der Mantelfläche als an einer Mitte der Mantelfläche aufweist.

5. Formiervorrichtung (200) nach einem der Ansprüche 1 bis 4, **gekennzeichnet durch** mindestens ein in das Rohr (10) einsetzbares Dichtelement (230) zum zumindest teilweisen Abdichten des zugeführten Wurzelschutzgases in einer axialen Rohrrichtung.

6. Formiervorrichtung (200) nach einem der Ansprüche 1 bis 5, **gekennzeichnet durch** mindestens ein in das Rohr (10) einsetzbares, insbesondere gasdurchlässiges, Zentrierelement (240) zum Zentrieren der Wurzelschutzgasleiteinrichtung (210).

7. Formiervorrichtung (200) nach Anspruch 6, wobei das mindestens eine Zentrierelement (240) in axialer Richtung nur an einer Seite bezüglich der Wurzelschutzgasleiteinrichtung (210) angeordnet ist.

8. Formiervorichtung (200) nach Anspruch 6, soweit dieser von Anspruch 5 abhängt, wobei das mindestens eine Zentrierelement (240) und das mindestens eine Dichtelement (230) in axialer Richtung nur an einer Seite bezüglich der Wurzelschutzgasleiteinrichtung (210) angeordnet sind.

9. Formiervorrichtung (200) nach einem der vorstehenden Ansprüche, wobei die Wurzelschutzgaszuführeinrichtung (220) ein Diffusor ist.

10. Verfahren zum Formieren oder zum Zuführen mindestens eines Wurzelschutzgases zur Wurzelseite mindestens eines zu fügenden Bereichs (11) mindestens eines Rohrs (10), wobei das zugeführte Wurzelschutzgas in Richtung entlang einer Innenseite des Rohres (10) entlang der Wurzelseite des zu fügenden Bereichs geleitet, geführt oder gelenkt wird, **dadurch gekennzeichnet, dass** das Wurzelschutzgas zusätzlich in radialer Richtung geführt wird, so dass bei Zusammenfügen mit einem Rohrbogen (12) das Wurzelschutzgas entlang einer Krümmung des Rohrbogens (12) in axialer Richtung geführt wird.

11. Verfahren nach Anspruch 10, wobei als Wurzelschutzgas Argon, Stickstoff und/oder Wasserstoff verwendet werden.

12. Verfahren nach Anspruch 10 oder 11, wobei eine Formiervorrichtung (200) nach einem der Ansprüche 1 bis 9 verwendet wird.
